# FASCICULE DE BREVET EUROPEEN

(11) **EP 0 717 333 B1**
(45) Date de publication et mention de la délivrance du brevet: **04.07.2001**
(21) Numéro de dépôt: 95410140.8
(22) Date de dépôt: 13.12.1995
(51) Int. Cl.: G05F 1/563, H02P 13/06

(54) **Circuit de sélection d'une tension d'alimentation d'un régulateur de tension**
Speisespannung-Auswahlschaltung für Spannungsregler
Supply voltage selection circuit for a voltage controller

(30) Priorité: 16.12.1994 FR 9415520
(43) Date de publication de la demande: 19.06.1996
(73) Titulaire: STMicroelectronics S.A., 94250 Gentilly (FR)
(72) Inventeur: Couet, Jean-Yves, F-38950 Saint Martin le Vinoux (FR); Saunier, Jean-Paul, F-38120 Saint Egreve (FR)
(74) Mandataire: de Beaumont, Michel

(56) Documents cités:
- EP-A- 0 505 038
- US-A- 4 061 958
- US-A- 4 733 158

## Description

La présente invention concerne un circuit automatique de sélection d'une tension d'alimentation d'un régulateur de tension, parmi plusieurs tensions d'alimentation continues de valeurs différentes.

Un régulateur, ou stabilisateur, de tension est utilisé pour délivrer une tension continue de valeur prédéterminée qui soit régulière, à partir d'une tension d'alimentation continue susceptible de subir des variations. Un tel régulateur est par exemple utilisé pour fournir une tension d'alimentation régulée à un montage électronique à partir d'une tension fournie, par exemple, par un transformateur et redresseur de tension alimenté par le réseau alternatif industriel.

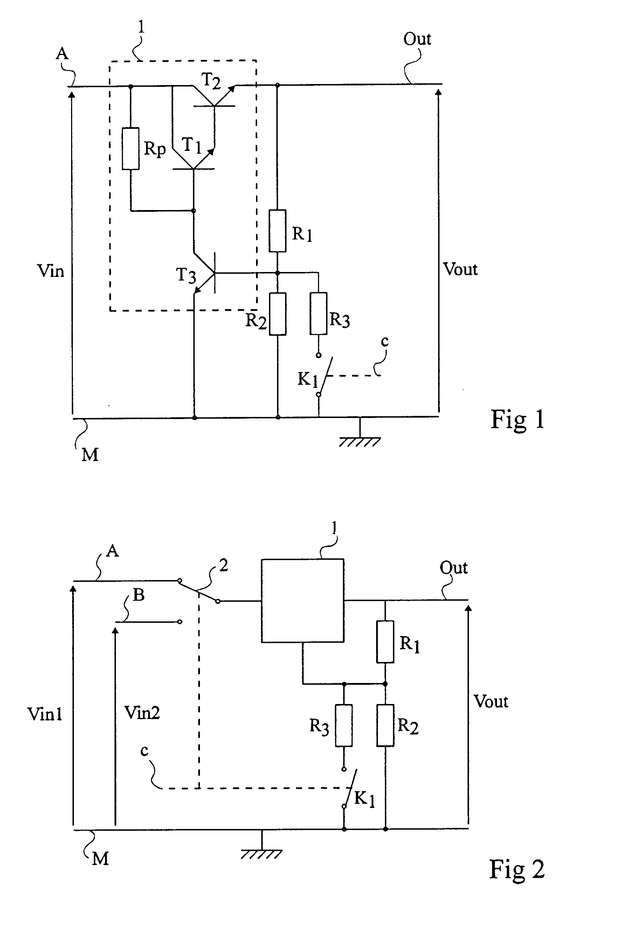

La figure 1 représente un exemple de schéma classique d'un régulateur de tension. Ce régulateur 1 est basé sur un montage dit Darlington de deux transistors bipolaires T1 et T2. Une tension d'alimentation continue Vin est fournie, par exemple, à partir du réseau industriel à 220 V par un transformateur et un redresseur (non représentés).

Les collecteurs des transistors T1 et T2 de type NPN sont reliés à une borne positive A de la tension d'alimentation Vin, une borne négative M étant à la masse. L'émetteur du transistor T1 est relié à la base du transistor T2, tandis que l'émetteur du transistor T2 est relié à la borne positive de sortie du régulateur 1. La base du transistor T1 est connectée à la borne A par l'intermédiaire d'une résistance de polarisation Rp, ainsi qu'au collecteur d'un transistor bipolaire de type NPN T3. L'émetteur du transistor T3 est connecté, par exemple à la borne M, tandis que sa base est reliée au point intermédiaire d'un diviseur de tension constitué de résistances R1, R2. L'autre borne de la résistance R1 est reliée à l'émetteur du transistor T2, l'autre borne de la résistance R2 est connectée à la masse. La sortie du régulateur est constituée par une borne Out reliée à l'émetteur du transistor T2.

Le fonctionnement d'un tel régulateur est parfaitement connu. Il se base sur une modification de la polarisation du transistor T1 du montage Darlington en fonction du potentiel présent sur la base du transistor T3. Si ce potentiel est supérieur au potentiel de la borne M, ici la masse, majoré de la tension base-émetteur Vbe du transistor T3, le courant dans le montage Darlington diminue et la tension de sortie Vout diminue. Si le potentiel présent sur la base du transistor T3 est inférieur au potentiel de la borne M, majoré de la tension base-émetteur Vbe du transistor T3, le courant: dans le montage Darlington augmente et la tension de sortie Vout augmente. Comme le potentiel présent sur la base du transistor T3 est égal à k^{*}Vout, où k représente le rapport du pont diviseur de tension, la valeur de la tension de sortie Vout est ainsi régulée.

Il ne s'agit là que d'un exemple de réalisation d'un régulateur de tension. D'autres montages sont connus. En particulier, on a de plus en plus souvent recours à des régulateurs de tension intégrés qui reçoivent, sur une entrée, une tension d'alimentation, et qui délivrent une tension de sortie Vout, dont la valeur est fixée par un pont diviseur de tension. Le point milieu du pont diviseur est relié à une borne de paramétrage du régulateur intégré. La fonction mise en oeuvre par de tels régulateurs peut être assimilée à la fonction des transistors T1, T2, T3 et de la résistance Rp du schéma représenté à la figure 1.

Un exemple typique de l'emploi d'un tel régulateur concerne les régulateurs 50/60 Hz alimentés par le réseau industriel à 220 V. Le régulateur est alimenté à partir du secondaire redressé d'un transformateur.

Pour certaines applications, un même régulateur de tension est utilisé pour délivrer une tension pouvant présenter deux valeurs différentes en fonction de différents modes de fonctionnement du circuit dans lequel il est implanté. La sélection de la valeur de la tension devant être délivrée s'effectue en modifiant le rapport k du pont diviseur. Pour cela, on connecte une résistance R3 en parallèle sur la résistance R2, par l'intermédiaire d'un interrupteur K1, commandé par un signal C issu d'un système de commande. Dans un tel cas, la tension d'alimentation du régulateur doit être suffisante pour permettre à ce dernier de délivrer une tension régulée dans les deux modes de fonctionnement du circuit.

Cela entraîne une forte dissipation d'énergie dans le régulateur de tension. En effet, la tension d'alimentation doit être supérieure à la valeur maximale de la tension de sortie, majorée de la chute de tension maximale Vmax dans le régulateur de tension. De plus, on doit tenir compte de variations possibles dans la tension du réseau.

Pour permettre une alimentation correcte en cas de variation de la tension du réseau, certains circuits comparent la tension d'alimentation du régulateur par rapport à une tension de référence. L'enroulement secondaire du transformateur comporte alors plusieurs bornes qui permettent une augmentation incrémentielle de la tension d'alimentation du régulateur par une mise en série de portions de l'enroulement si la tension du réseau diminue. Un tel circuit est par exemple décrit dans le brevet américain n° 4 733 158.

Le brevet américain n° 4 061 958 décrit un circuit dans lequel la mise en série de portions de l'enroulement secondaire du transformateur s'effectue en fonction du courant appelé par une charge connectée en sortie du régulateur pour augmenter par incrément la tension d'alimentation du régulateur afin que la dissipation d'énergie dans le régulateur associé à la charge corresponde à une valeur prédéterminée.

De tels circuits modifient la tension redressée pour appliquer une tension suffisante au régulateur ce qui implique que cette tension doit être dédiée au régulateur.

Dans des applications où plusieurs tensions d'alimentation continues sont susceptibles d'être utilisées, on préfère généralement avoir recours à des circuits qui ne modifient pas la tension délivrée par le redresseur mais qui sélectionnent la tension d'alimentation du régulateur parmi plusieurs tensions d'alimentation continues indépendantes qui sont, par ailleurs, utilisées par d'autres circuits.

Pour remédier dans ce cas à une consommation excessive d'énergie, on sélectionne la tension devant être appliquée sur le régulateur de tension en fonction de la tension de sortie souhaitée. La figure 2 représente, sous forme de schéma-bloc, un circuit de ce type. On utilise deux tensions d'alimentation Vinl et Vin2, fournies par exemple, sur deux bornes A et B, par deux enroulements secondaires d'un transformateur, associés chacun à un redresseur. On sélectionne une de ces deux tensions d'alimentation au moyen d'un commutateur 2, commandé par le même signal C que l'interrupteur K1 de sélection de la tension de sortie Vout. Sur cette figure 2, les éléments présents à la figure 1 ont été désignés par les mêmes références.

Un exemple d'application d'un tel système concerne l'alimentation de têtes haute-fréquence de récepteurs de signaux de satellites (ou LNB) dont le synoptique de l'alimentation est représenté à la figure 2. La sélection entre les deux tensions d'alimentation Vin1, Vin2, et la valeur de la tension de sortie Vout, dépendent du type de canal que l'on souhaite recevoir. En effet, certains canaux requièrent une polarisation dite horizontale de la partie active de la tête haute-fréquence, alors que d'autres canaux requièrent une polarisation dite verticale de cette tête. La tête est par exemple alimentée en 13 V, pour une polarisation verticale, et en 18V pour une polarisation horizontale. On utilise, généralement, pour la sélection des tensions d'entrées Vin1, Vin2, et de la valeur de la tension de sortie Vout, un signal de commande C, issu d'un microprocesseur et qui est fonction de la mémorisation des polarisations associées aux canaux.

Un inconvénient qui subsiste dans une telle solution, quelle que soit l'application à laquelle elle est destinée, est que les tensions d'alimentation du régulateur 1 doivent être suffisamment élevées, non seulement pour compenser la chute de tension dans le régulateur 1 et dans le commutateur 2, mais également pour tenir compte de chutes de tension éventuelles du réseau. Ces chutes de tension peuvent provenir de variations dans la tension délivrée par le réseau. On considère habituellement que la tension alternative délivrée par le réseau peut varier, d'un endroit à un autre, de 20 % en plus ou en moins par rapport à sa tension nominale. Cela entraîne que les tensions d'alimentation Vin1, Vin2 du régulateur 1 doivent être supérieures d'environ 50 % à la valeur de la tension de sortie Vout souhaitée, ceci afin de pouvoir délivrer une tension stable dans tous les cas de figure. La marge qui doit être prise par rapport à la tension de sortie Vout souhaitée entraîne une consommation d'énergie excessive.

Cela conduit à une forte dissipation d'énergie dans le régulateur de tension, ce qui est néfaste non seulement pour la consommation globale d'énergie, mais également pour la dimension des circuits de ce type.

L'invention vise à pallier ces inconvénients, en proposant un circuit de sélection de la tension d'alimentation d'un régulateur de tension, qui sélectionne automatiquement et parmi plusieurs tensions continues et indépendantes, celle qui entraîne la moindre consommation d'énergie pour la tension de sortie visée.

L'invention vise également à proposer un circuit qui adapte en permanence la sélection effectuée en fonction des valeurs effectives des différentes tensions continues et/ou de la charge.

Pour atteindre ces objets, la présente invention prévoit un circuit de sélection automatique d'une tension d'alimentation d'un régulateur de tension, par l'intermédiaire d'un commutateur, comportant des moyens pour actionner le commutateur de façon à sélectionner automatiquement, parmi au moins deux tensions d'alimentation continues et indépendantes, celle qui entraîne la plus faible dissipation d'énergie dans le régulateur.

Selon un mode de réalisation de l'invention, lesdits moyens comprennent un ensemble de comparateurs des tensions d'alimentation entre elles et par rapport à une tension de sortie du régulateur, et un dispositif logique de combinaison des résultats issus des comparateurs.

Selon un mode de réalisation de l'invention, les entrées des comparateurs recevant les tensions d'alimentation sont reliées à des bornes d'alimentation, par l'intermédiaire de décaleurs de tension qui minorent les tensions d'alimentation d'une valeur prédéterminée, cette valeur étant choisie pour correspondre à la chute de tension maximale dans le régulateur et dans le commutateur.

Selon un mode de réalisation de l'invention, chaque décaleur de tension est constitué de diodes montées en série entre la borne d'alimentation dont il doit minorer la tension, et les entrées des comparateurs auxquelles il est associé.

Selon un mode de réalisation de l'invention, ledit dispositif logique est constitué d'inverseurs et de portes logiques, et délivre un signal de commande du commutateur en fonction des signaux de sorties des comparateurs qu'il reçoit.

Selon un mode de réalisation de l'invention, les comparateurs sont constitués d'amplificateurs opérationnels, chaque amplificateur opérationnel étant polarisé par les tensions d'alimentation.

Selon un mode de réalisation de l'invention, le régulateur de tension est associé à un interrupteur de sélection de la valeur de sa tension de sortie parmi plusieurs valeurs, les tensions d'alimentation étant choisies pour qu'au moins une des valeurs des tensions de sortie soit contenue dans les plages de variation d'au moins deux tensions d'alimentation.

Selon un mode de réalisation de l'invention, les tensions d'alimentation sont fournies par le réseau alternatif industriel, par l'intermédiaire d'au moins un transformateur et d'au moins un redresseur.

Selon un mode de réalisation de l'invention, le circuit est appliqué à la polarisation d'une tête haute-fréquence d'un système de réception satellite.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1 et 2 décrites précédemment sont destinées à exposer l'état de la technique et le problème posé;
la figure 3 représente, sous forme de schéma-bloc, un mode de réalisation d'un circuit automatique de sélection d'une tension d'alimentation d'un régulateur de tension, selon l'invention ; et
la figure 4 représente un mode de réalisation du circuit représenté à la figure 3.

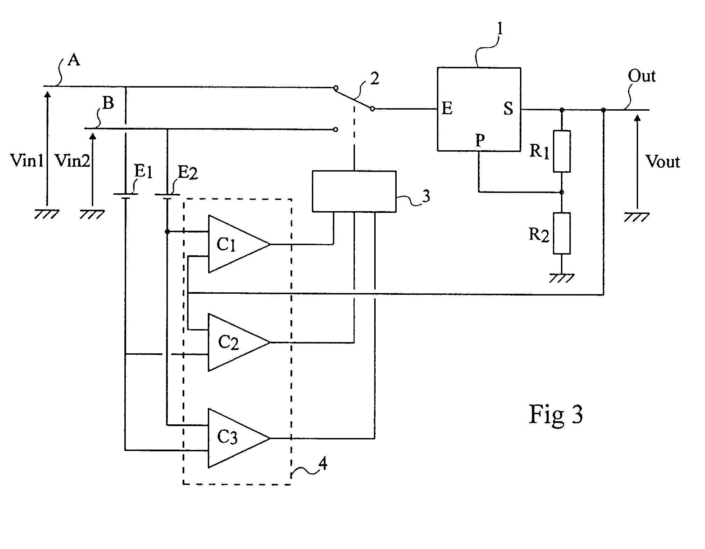

Le circuit selon l'invention, tel que représenté à la figure 3, comporte essentiellement un commutateur 2 de sélection de la tension d'alimentation d'un régulateur 1, dont la commande est assurée par un dispositif logique 3 d'interprétation de résultats fournis par un ensemble de comparateurs 4. Des comparateurs C1, C2, C3 de l'ensemble 4 sont destinés à comparer les tensions d'alimentation Vinl, Vin2 du circuit, entre elles et par rapport à la tension de sortie Vout du régulateur 1.

L'idée mère de la présente invention est d'utiliser le fait que les tensions d'alimentation ont fréquemment des plages de variation qui se chevauchent pour sélectionner la tension qui, tout en étant suffisante, entraînera la plus faible dissipation d'énergie. Ainsi, il suffit qu'une valeur de la tension de sortie souhaitée pour le régulateur soit contenue dans les plages de variation d'au moins deux tensions d'alimentation pour que le circuit selon l'invention permette une réduction de la dissipation d'énergie dans le régulateur.

Deux entrées du commutateur 2 sont respectivement connectées à deux bornes d'alimentation A et B du circuit qui fournissent respectivement les tensions Vinl et Vin2. Une sortie du commutateur 2 est reliée à une entrée d'alimentation E du régulateur de tension 1, dont une sortie S délivre, sur une borne Out, la tension régulée Vout. La valeur de cette tension Vout régulée est fixée par un pont diviseur de tension constitué de deux résistances R1 et R2, le point milieu du pont diviseur étant relié à une entrée de paramétrage P du régulateur 1.

Une entrée de commande du commutateur 2 est reliée à une sortie du dispositif logique 3. Ce dispositif comporte, dans l'exemple représenté, trois entrées qui sont chacune reliées à une sortie d'un des comparateurs C1, C2, C3. Deux entrées du comparateur C1 sont respectivement reliées à la borne de sortie Out du régulateur 1 et, par l'intermédiaire d'un dispositif E2 produisant une chute de tension prédéterminée, à la borne B d'alimentation au potentiel Vin2. Deux entrées du comparateur C2 sont respectivement reliées à la borne de sortie Out du régulateur 1 et, par l'intermédiaire d'un dispositif E1 produisant une chute de tension prédéterminée, à la borne A d'alimentation au potentiel Vinl. Deux entrées du comparateur C3 sont reliées, respectivement par l'intermédiaire d'un des dispositifs E1 ou E2, respectivement à la borne A au potentiel Vin1 et à la borne B au potentiel Vin2. Le rôle des dispositifs E1 et E2 est de minorer le potentiel des entrées des comparateurs auxquelles elles sont reliées, d'une valeur correspondant à la chute de tension maximale Vmax dans le régulateur 1 et dans le commutateur 2. Ces deux dispositifs E1 et E2, qui seront appelés par la suite des décaleurs de tension, présentent en pratique, une chute de tension de même valeur.

Ainsi, le comparateur C1 compare la valeur de la tension de sortie Vout à la valeur de la tension d'alimentation Vin2, minorée de la chute de tension Vmax. Le comparateur C2 compare la valeur de la tension de sortie Vout à la valeur de la tension d'alimentation Vin1 minorée de la chute de tension Vmax. Et, le comparateur C3 compare les tensions d'alimentation Vin1 et Vin2.

Le dispositif logique 3 est chargé d'interpréter les résultats de ces comparaisons pour sélectionner, parmi les deux tensions d'alimentation Vin1 et Vin2, la tension la plus faible pourvu qu'elle soit supérieure à la tension de sortie Vout majorée de la chute de tension maximale Vmax.

Ainsi, le circuit tel que représenté permet de sélectionner automatiquement, parmi plusieurs tensions d'alimentation, celle qui entraînera la plus faible dissipation d'énergie dans le régulateur. Il est à noter que le fonctionnement de ce circuit est autonome et qu'il ne nécessite aucun signal de commande extérieur.

La table de vérité du dispositif logique 3 est donnée au tableau 1 ci-dessous, en indiquant pour chaque combinaison des valeurs d'entrée, correspondant aux sorties des comparateurs C1, C2, C3, la tension d'alimentation Vinl ou Vin2 qui est sélectionnée par le commutateur 2.

La tension de sortie du régulateur peut, le cas échéant, prendre plusieurs valeurs. Ces valeurs sont fixées classiquement en modifiant le rapport du pont diviseur de tension constitué des résistances R1 et R2, par l'adjonction d'une ou plusieurs résistances en parallèle sur la résistance R2, par l'intermédiaire d'un ou plusieurs interrupteurs de commande.

**Tableau 1**

| C1 | C2 | C3 | Tension d'alimentation sélectionnée |
|---|---|---|---|
| 0 | 0 | 0 | Vin1 |
| 1 | 0 | 0 | cas impossible |
| 0 | 1 | 0 | Vin1 |
| 1 | 1 | 0 | Vin2 |
| 0 | 0 | 1 | Vin2 |
| 1 | 0 | 1 | Vin2 |
| 0 | 1 | 1 | cas impossible |
| 1 | 1 | 1 | Vin1 |

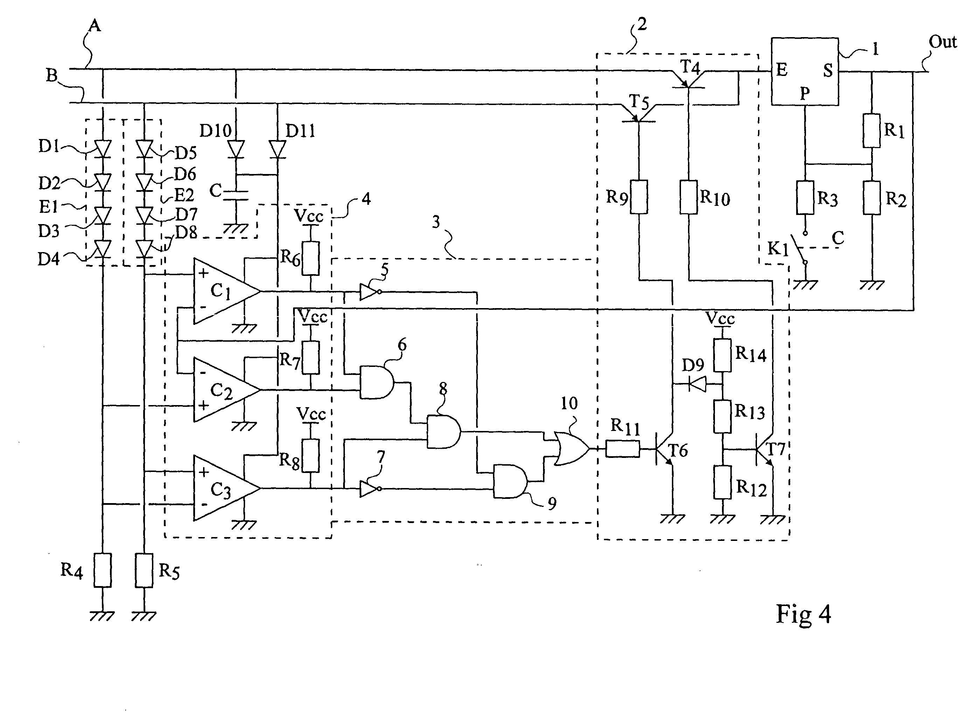

La figure 4 représente un exemple de réalisation pratique d'un tel circuit de sélection.

Le circuit représenté à la figure 4 comprend les mêmes éléments que ceux représentés à la figure 3. Ces éléments ont été désignés par les mêmes références. La seule distinction concerne l'adjonction d'un interrupteur K1 de sélection de la tension de sortie Vout du régulateur 1. Mais son fonctionnement est indépendant du circuit selon l'invention, l'interrupteur K1 qui commande la mise en parallèle d'une résistance R3 dans le pont diviseur de tension étant commandé classiquement. Ce circuit peut par exemple s'appliquer à l'alimentation de la tête haute-fréquence d'un récepteur satellite, l'interrupteur K1 étant alors commandé par un signal C, issu d'un microprocesseur, et qui est fonction de la mémorisation de la polarisation attachée au canal souhaité.

Les deux décaleurs de tension E1 et E2 sont ici constitués de diodes. Chaque décaleur de tension comporte quatre diodes, respectivement D1, D2, D3, D4 et D5, D6, D7, D8, montées en série entre une borne A ou B d'alimentation et, par l'intermédiaire d'une résistance R4 ou R5, la masse. La chute de tension aux bornes des décaleurs de tension E1 et E2 correspond ainsi à quatre jonctions PN, soit environ 2,4 V. Le nombre de diodes est choisi en fonction de la chute de tension maximale Vmax dans le régulateur 1 et dans le commutateur 2.

L'ensemble 4 de comparateurs est constitué de trois comparateurs C1, C2, C3 à base d'amplificateurs opérationnels. Le premier amplificateur opérationnel C1 reçoit, sur son entrée non-inverseuse, la tension d'alimentation Vin2 minorée de la chute de tension dans le décaleur de tension E2. L'entrée inverseuse de l'amplificateur opérationnel C1 est reliée à la borne de sortie Out du circuit. Le deuxième amplificateur opérationnel C2 reçoit, sur son entrée non-inverseuse, la tension d'alimentation Vinl minorée de la chute de tension dans le décaleur de tension E1. L'entrée inverseuse de l'amplificateur opérationnel C2 est reliée à la borne de sortie Out du circuit. Les entrées inverseuse et non-inverseuse du troisième amplificateur opérationnel C3 reçoivent respectivement les tensions d'alimentation Vin1 et Vin2, minorées des chutes de tension dans les diodes D1, D2, D3, D4 et D5, D6, D7, D8.

Les sorties des trois comparateurs C1, C2, C3 sont envoyées sur les entrées du dispositif logique 3. Ces sorties sont toutes reliées à une tension d'alimentation Vcc, par l'intermédiaire d'une résistance, respectivement R6, R7 et R8. La tension d'alimentation Vcc est, par exemple, une tension de 5 volts.

Le dispositif logique 3 est constitué d'une association d'inverseurs et de portes logiques. La sortie du comparateur C1 est envoyée, d'une part sur l'entrée d'un inverseur 5, et d'autre part sur une des deux entrées d'une porte ET 6. L'autre entrée de la porte ET 6 reçoit la sortie du comparateur C2. La sortie du comparateur C3 est envoyée sur l'entrée d'un inverseur 7 et sur une première entrée d'une porte ET 8. La deuxième entrée de la porte ET 8 reçoit la sortie de la porte ET 6. Les sorties des deux inverseurs 5 et 7 sont respectivement connectées aux première et deuxième entrées d'une porte ET 9 dont la sortie est envoyée sur une première entrée d'une porte OU 10. La deuxième entrée de la porte OU 10 reçoit la sortie de la porte ET 8. La sortie de la porte OU 10 constitue la sortie du dispositif logique 3 qui est envoyée sur l'entrée de commande du commutateur 2. Un tel dispositif logique présente une table de vérité conforme à celle exposée en relation avec la figure 3.

Le commutateur 2 est constitué de deux transistors bipolaires T4, T5 de type PNP dont les émetteurs sont respectivement connectés aux bornes A et B d'alimentation. Les collecteurs des transistors T4, T5 sont reliés ensemble à l'entrée d'alimentation E du régulateur de tension 1. Les bases des transistors T4, T5 sont chacune reliées par l'intermédiaire d'une résistance R9, R10, respectivement, au collecteur d'un transistor bipolaire de type NPN T6, T7. Les émetteurs des transistors T6 et T7 sont connectés à la masse. La base du transistor T6 est connectée, par l'intermédiaire d'une résistance R11, à la sortie du dispositif logique 3. La base du transistor T7 est connectée à la masse, par l'intermédiaire d'une résistance R12, et à la tension d'alimentation Vcc, par l'intermédiaire de deux résistances en série R13 et R14. Le point de connexion des résistances R13 et R14 est relié, par l'intermédiaire d'une diode D9, au collecteur du transistor T6.

Les amplificateurs opérationnels C1, C2, C3 sont polarisés par les tensions d'alimentation Vin1 et Vin2, par l'intermédiaire de diodes, respectivement D10 et D11. Les cathodes des diodes sont connectées ensemble à la masse, par l'intermédiaire d'un condensateur C, tandis que leur anode est respectivement reliée à la borne A ou B. Un avantage de prévoir une telle polarisation pour les amplificateurs opérationnels est que cela permet, si pour une raison quelconque, une des tensions d'alimentation vient à disparaître, de maintenir le circuit en fonctionnement avec la tension restante. Dans ce cas, le circuit ne peut, bien entendu, plus sélectionner la tension qui entraîne une dissipation la plus faible, mais on permet au régulateur de fonctionner, au moins pour sa tension de sortie la plus faible.

Dans certains cas, le régulateur de tension est un régulateur ajustable dont l'entrée de paramétrage reçoit un signal variable. Le système de commande doit alors, dans les circuits classiques, envoyer deux signaux. Un premier signal est un signal numérique C pour commander le commutateur 2, et un second signal est un signal analogique d'ajustage de la tension régulée. Par la mise en oeuvre de l'invention, on évite alors le besoin du premier signal, dans la mesure où la sélection de la tension d'alimentation est autonome. Cela permet, lors de l'intégration du circuit, d'économiser une patte de connexion. De tels cas se retrouvent, en particulier, dans les alimentations dites à découpage.

A titre d'exemple, on a réalisé un circuit selon l'invention, appliqué à la polarisation d'une tête haute-fréquence de réception satellite. Les tensions d'alimentation Vin1, Vin2 sont fournies par les sorties redressées de deux enroulements secondaires d'un transformateur alimenté par le réseau à 220 V, qui présentent respectivement un potentiel nominal de 20 V et 16 V. La tête haute-fréquence doit être alimentée par un courant de 0,3 A, sous une tension de 18 V pour une polarisation horizontale, et de 13 V pour une polarisation verticale. Lorsque la valeur de 13 V est requise à la sortie du régulateur de tension, c'est toujours la tension d'alimentation la plus faible (Vin2) qui est sélectionnée. Par contre, quand la valeur de Vout doit être de 18 V, la tension d'alimentation la plus élevée (Vin1) est utilisée tant que la tension du réseau industriel reste inférieure à une valeur telle que la tension d'alimentation Vin2 devienne supérieure à 18 V + Vmax. Dès que cette valeur est atteinte, le circuit commute et la tension Vout de 18 V est fournie par la tension d'alimentation la plus faible (Vin2), qui bien que de valeur nominale 16 V, présente en réalité une valeur supérieure. Pour des variations de la tension du réseau industriel de 20% en plus ou en moins par rapport à la valeur nominale de 220 V, la plage de dissipation d'énergie dans le régulateur est ainsi comprise entre 0,6 et 2,1 W pour une polarisation horizontale, alors qu'elle était précédemment comprise entre 0,6 et 3,6 W.

De plus, d'autres potentiels sont fréquemment présents dans les systèmes de réception satellite. On peut ainsi effectuer la sélection parmi plus de deux valeurs, en adaptant le dispositif logique et en ajoutant des comparateurs, pourvu qu'une des tensions de sortie soit contenue dans les plages de variation d'au moins deux tensions d'alimentation.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction. La détermination des valeurs des résistances et condensateur ainsi que le choix des composants (transistors, diodes, amplificateurs opérationnels, portes logiques, etc.) sont à la portée de l'homme de l'art en fonction des caractéristiques de fonctionnement souhaitées. De plus, bien que la description qui précède ait fait référence à une sélection entre deux tensions d'alimentation, le circuit selon l'invention convient quel que soit le nombre de tensions d'alimentation. Il est clair que, plus ce nombre sera élevé, plus la sélection sera fine et plus l'énergie dissipée dans le régulateur sera faible. De plus, l'invention s'applique quel que soit le nombre de valeurs de tension de sortie pour le régulateur, et ce de manière indépendante par rapport à ce nombre de valeurs.

En outre, l'invention n'est nullement limitée aux applications qui ont été indiquées précédemment à titre d'exemple. L'invention présente ainsi un intérêt sensible, notamment pour toute application dans laquelle une alimentation à découpage n'est pas utilisée pour des raisons de bruit (par exemple les lecteurs de disques à lecture laser). Même dans le cas d'une alimentation à découpage, on a vu que l'invention présentait des avantages, notamment concernant l'intégration des circuits.

## Revendications

1. Circuit de sélection automatique d'une tension d'alimentation d'un régulateur de tension (1), par l'intermédiaire d'un commutateur (2), caractérisé en ce qu'il comporte des moyens (3, 4) pour actionner le commutateur (2) de façon à sélectionner automatiquement, parmi au moins deux tensions continues et indépendantes (Vin1, Vin2), celle qui entraîne la plus faible dissipation d'énergie dans le régulateur (1).

2. Circuit de sélection automatique selon la revendication 1, caractérisé en ce que lesdits moyens comprennent un ensemble (4) de comparateurs (C1, C2, C3) des tensions d'alimentation (Vin1, Vin2) entre elles et par rapport à une tension de sortie (Vout) du régulateur (1), et un dispositif logique (3) de combinaison des résultats issus des comparateurs (C1, C2, C3).

3. Circuit de sélection automatique selon la revendication 2, caractérisé en ce que les entrées des comparateurs recevant les tensions d'alimentation (Vin1, Vin2) sont reliées à des bornes d'alimentation (A, B), par l'intermédiaire de décaleurs de tension (E1, E2) qui minorent les tensions d'alimentation (Vin1, Vin2) d'une valeur prédéterminée, cette valeur étant choisie pour correspondre à la chute de tension maximale (Vmax) dans le régulateur (1) et dans le commutateur (2).

4. Circuit de sélection automatique selon la revendication 3, caractérisé en ce que chaque décaleur de tension (E1 ; E2) est constitué de diodes (D1, D2, D3, D4 ; D5, D6, D7, D8) montées en série entre la borne d'alimentation (A ; B) dont il doit minorer la tension, et les entrées des comparateurs (C2, C3 ; C1, C3) auxquelles il est associé.

5. Circuit de sélection automatique selon la revendication 3 ou 4, caractérisé en ce que ledit dispositif logique (3) est constitué d'inverseurs (5, 7) et de portes logiques (6, 8, 9, 10), et délivre un signal de commande du commutateur (2) en fonction des signaux de sorties des comparateurs (C1, C2, C3) qu'il reçoit.

6. Circuit de sélection automatique selon l'une quelconque des revendications 2 à 5, caractérisé en ce que les comparateurs (C1, C2, C3) sont constitués d'amplificateurs opérationnels, chaque amplificateur opérationnel étant polarisé par les tensions d'alimentation (Vin1, Vin2).

7. Circuit de sélection automatique selon l'une quelconque des revendications 1 à 6, caractérisé en ce que le régulateur de tension (1) est associé à un interrupteur (K1) de sélection de la valeur de sa tension de sortie (Vout) parmi plusieurs valeurs, et en ce que les tensions d'alimentation sont choisies pour qu'au moins une des valeurs des tensions de sortie (Vout) soit contenue dans les plages de variation d'au moins deux tensions d'alimentation (Vin1, Vin2).

8. Circuit de sélection automatique selon l'une quelconque des revendications 1 à 7, caractérisé en ce que les tensions d'alimentation (Vin1, Vin2) sont fournies par le réseau alternatif industriel, par l'intermédiaire d'au moins un transformateur et d'au moins un redresseur.

9. Circuit de sélection automatique selon l'une quelconque des revendications 1 à 8, caractérisé en ce qu'il est appliqué à la polarisation d'une tête haute-fréquence d'un système de réception satellite.

## Patentansprüche

1. Schaltung zur automatischen Wahl einer Speisespannung für einen Spannungsregler, mittels eines Schalters, **dadurch gekennzeichnet**, daß die Schaltung Mittel (3, 4) zur Betätigung des Schalters (2) aufweist, derart daß dieser automatisch unter wenigstens zwei unabhängigen Spannungen (Vin1, Vin2) diejenige auswählt, welche die geringste Verlustenergie in dem Regler (1) zur Folge hat.

2. Automatische Wählschaltung nach Anspruch 1, dadurch gekennzeichnet, daß die genannten Mittel ein Aggregat (4) von Komparatoren (C1,C2, C3) aufweist, welche die Speisespannungen (Vin1, Vin2) untereinander und mit Bezug auf eine Ausgangsspannung (Vout) des Reglers (1) vergleichen, sowie eine Logikvorrichtung (3) zur Kombination der von den Komparatoren (C1, C2, C3) herrührenden Ergebnisse umfassen.

3. Automatische Wählschaltung nach Anspruch 2, dadurch gekennzeichnet, daß die Eingänge der Komparatoren, welchen die Speisespannungen (Vin1, Vin2) zugeführt werden, mit Speiseanschlüssen (A, B) über Spannungsversetzer (E1, E2) verbunden sind, welche die Speisespannungen (Vin1, Vin2) um einen vorgegebenen Betrag herabsetzen, wobei dieser Betrag so gewählt wird, daß er dem maximalen Spannungsabfall (Vmax) in dem Regler (1) und in dem Schalter (2) entspricht.

4. Automatische Wählschaltung nach Anspruch 3, dadurch gekennzeichnet, daß die Spannungsversetzer (E1, E2) jeweils aus Dioden (D1, D2, D3, D4; D5, D6, D7, D8) bestehen, die in Reihe zwischen dem Speiseanschluß (A; B), dessen Spannung sie herabsetzen sollen, und den Eingängen der Komparatoren (C2, C3; C1, C3), denen sie zugeordnet sind, angeordnet sind.

5. Automatische Wählschaltung nach Anspruch 3 oder 4, dadurch gekennzeichnet, daß die genannte Logikvorrichtung (3) aus Invertern (5, 7) und logischen Gattern (6, 8, 9, 10) besteht, und daß sie ein Steuersignal für den Schalter (2) als Funktion der ihr zugeführten Ausgangssignale der Komparatoren (C1, C2, C3) erzeugt.

6. Automatische Wählschaltung nach einem der Ansprüche 2 bis 5, dadurch gekennzeichnet, daß die Komparatoren (C1, C2, C3) aus Operationsverstärkern bestehen, wobei jeder Operationsverstärker jeweils durch die Speisespannungen (Vinl, Vin2) vorgespannt ist.

7. Automatische Wählschaltung nach einem der Ansprüche 1 bis 6, dadurch gekennzeichnet, daß der Spannungsregler (1) einem Schalter (K1) zur Wahl des Betrags seiner Ausgangsspannung (Vout) unter mehreren Beträgen zugeordnet ist, und daß die Speisespannungen so gewählt werden, daß wenigstens einer der Beträge der Ausgangsspannungen (Vout) in den Änderungsbereichen von wenigstens zwei Speisespannungen (Vin1, Vin2) enthalten ist.

8. Automatische Wählschaltung nach einem der Ansprüche 1 bis 7, dadurch gekennzeichnet, daß die Speisespannungen (Vin1, Vin2) aus dem industriellen Wechselstromnetz mittels wenigstens einem Tansformator und wenigstens einem Gleichrichter gewonnen werden.

9. Automatische Wählschaltung nach einem der Ansprüche 1 bis 8, dadurch gekennzeichnet, daß die Schaltung zur Polarisation eines Hochfrequenzkopfs eines Satellitenempfangssystems angewandt wird.

## Claims

1. A circuit for automatically selecting by a switch (2) the supply voltage of a voltage regulator (1), characterized in that it includes means (3, 4) for actuating the switch (2) in order to automatically select, from among at least two independent d.c. supply voltages (Vin1, Vin2), the voltage that causes the lowest energy dissipation in the regulator (1).

2. The circuit of claim 1, characterized in that said means include a set (4) of comparators (C1, C2, C3) for comparing the various supply voltages (Vin1, Vin2) with respect to one another and with respect to an output voltage (Vout) of the regulator (1), and a logic circuit (3) for combining the results provided by the comparators (C1, C2, C3).

3. The circuit of claim 2, characterized in that the inputs of the comparators that receive the supply voltages (Vin1, Vin2) are connected to supply terminals (A, B), through voltage offset means (E1, E2) that decrease the supply voltages (Vin1, Vin2) by a predetermined value, said value being selected so as to correspond to the maximum voltage drop (Vmax) in the regulator (1) and in the switch (2).

4. The circuit of claim 3, characterized in that each voltage offset means (E1; E2) includes diodes (D1, D2, D3, D4; D5, D6, D7, D8) connected in series between the supply terminal (A; B) whose voltage should be decreased by the voltage offset means, and the inputs of the comparators (C2, C3; C1, C3) with which the offset means is associated.

5. The circuit of claim 3 or 4, characterized in that said logic device (3) includes inverters (5, 7) and logic gates (6, 8, 9, 10), and provides a switch control signal (2) as a function of the output signals of the comparators (C1, C2, C3) received by the logic device.

6. The circuit of any of claims 2 to 5, characterized in that the comparators (C1, C2, C3) include operational amplifiers, each operational amplifier being biased by the supply voltages (Vin1, Vin2).

7. The circuit of any of claims 1 to 6, characterized in that the voltage regulator (1) is associated with a switch (K1) for selecting the value of its output voltage (Vout) from among several values, and wherein the supply voltages are selected so that at least one of the output voltages (Vout) is within the variation ranges of at least two supply voltages (Vin1, Vin2).

8. The circuit of any of claims 1 to 7, characterized in that the supply voltages (Vin1, Vin2) are provided by the a.c. mains, through at least one transformer and at least one rectifier.

9. The circuit of any of claims 1 to 8, characterized in that it is applied to the polarization of a high-frequency head of a satellite reception system.
